# EUROPEAN PATENT APPLICATION

(11) **EP 4 660 670 A1**
(43) Date of publication of application: **10.12.2025**
(21) Application number: 23919830.2
(22) Date of filing: 13.09.2023
(51) Int. Cl.: G02B 1/111, B32B 9/00

(54) **ANTIREFLECTIVE FILM**

(30) Priority: 30.01.2023 JP 2023011742
(71) Applicant: Shincron Co., Ltd., Kanagawa 220-8680 (JP)
(72) Inventor: TAKAHAMA, Yoshitaka, Yokohama-shi, Kanagawa 220-8680 (JP); SUGAWARA, Takuya, Yokohama-shi, Kanagawa 220-8680 (JP); TAGA, Yasunori, Nagoya-shi, Aichi 458-0824 (JP)
(74) Representative: Ter Meer Steinmeister & Partner
(86) International application number: PCT/JP2023/033375
(87) International publication number: WO 2024/161694

(57) **Abstract**

In order to suppress the occurrence of cracks due to tensile stress in addition to having antireflection properties and scratch resistance, an antireflection film (2) is provided, having a low refractive index layer (21) as the outermost layer on the surface of a substrate (1). The low refractive index layer (21) has a refractive index lower than that of the substrate (1). The low refractive index layer (21) contains silicon, carbon, fluorine and oxygen as essential components and further contains at least one of indium, tin or bismuth as an essential component, silicon oxide as a main component, and an organic fluorine compound.

## Description

### [Technical Field]

The present invention relates to an antireflection film.

### [Background Art]

Antireflection films applied to the surfaces of liquid crystal displays and the like are known, one of which is configured such that high refractive index layers and low refractive index layers are alternately laminated with the outermost layer being the low refractive index layer in order to reduce the reflection at the air interface (see paragraph [0046] of Patent Document 1).

### [Prior Art Documents]

### [Patent Documents]

[Patent Document 1] JP2022-65437A

### [Summary of Invention]

### [Problems to be solved by Invention]

Thin films applied to the surfaces of liquid crystal displays and the like, such as the antireflection films of the above conventional techniques, are required to have sufficient hardness to ensure scratch resistance in addition to the inherent antireflection properties. When applying an antireflection film to a flexible object such as a flexible display, however, in addition to hardness, toughness (capacity of materials to resist fracture) is also required so that cracks do not occur even when tensile stress acts, and it has been difficult to achieve both hardness and toughness.

A problem to be solved by the present invention is to provide an antireflection film that has antireflection properties and scratch resistance and is also capable of suppressing the occurrence of cracks due to tensile stress.

### [Means for solving problems]

First invention solves the above problem by providing an antireflection film having a low refractive index layer as an outermost layer on a surface of a substrate, the low refractive index layer having a refractive index lower than that of the substrate,
the low refractive index layer containing silicon, carbon, fluorine and oxygen as essential components and further containing at least one of indium, tin or bismuth as an essential component, silicon oxide as a main component, and an organic fluorine compound.

Second invention solves the above problem by providing an antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the high refractive index layer containing niobium, carbon, fluorine and oxygen as essential components and further containing at least one of indium, tin or bismuth as an essential component, niobium oxide as a main component, and an organic fluorine compound, or
the high refractive index layer containing cerium, carbon, fluorine and oxygen as essential components and further containing at least one of indium, tin or bismuth as an essential component, cerium oxide as a main component, and an organic fluorine compound.

Third invention solves the above problem by providing an antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the antireflection film further having the low refractive index layer between the substrate and the high refractive index layer closest to the substrate,
the low refractive index layer containing silicon, carbon, fluorine and oxygen as essential components and further containing at least one of indium, tin or bismuth as an essential component, silicon oxide as a main component, and an organic fluorine compound.

Fourth invention solves the above problem by providing an antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the antireflection film further having the low refractive index layer between the substrate and the high refractive index layer closest to the substrate,
the high refractive index layer containing niobium, carbon, fluorine and oxygen as essential components and further containing at least one of indium, tin or bismuth as an essential component, niobium oxide as a main component, and an organic fluorine compound, or
the high refractive index layer containing cerium, carbon, fluorine and oxygen as essential components and further containing at least one of indium, tin or bismuth as an essential component, cerium oxide as a main component, and an organic fluorine compound.

### [Effect of Invention]

In the present invention, carbon and fluorine contained in the low refractive index layer or the high refractive index layer are bonded to each other to form an organic fluorine bond such as a fluoroalkyl group, and in this state, they are present in the low refractive index layer or the high refractive index layer. When an external force in a tensile direction is applied to the low refractive index layer or the high refractive index layer, the organic fluorine bond expands and contracts, and the force applied to the entire layers is distributed thereby to suppress the occurrence of cracks. Moreover, the refractive index and transmission characteristics of the layers can be adjusted by adding indium, tin or bismuth. The antireflection properties can be ensured by utilizing the interference caused by the combination of a low refractive index layer and a high refractive index layer, and the scratch resistance can be ensured by the oxide of silicon, niobium or cerium. As a result, according to the present invention, the antireflection properties and scratch resistance can be achieved, and in addition to this, the occurrence of cracks due to tensile stress can be suppressed.

### [Brief Description of Drawings]

FIG. 1 is a cross-sectional view illustrating a first embodiment of the antireflection film according to the present invention.
FIG. 2 is a cross-sectional view illustrating a second embodiment of the antireflection film according to the present invention.
FIG. 3 is a cross-sectional view illustrating a third embodiment of the antireflection film according to the present invention.
FIG. 4 is a transverse cross-sectional view illustrating an example of a sputtering device for producing the antireflection film according to the present invention.

### [Mode(s) for Carrying out the Invention]

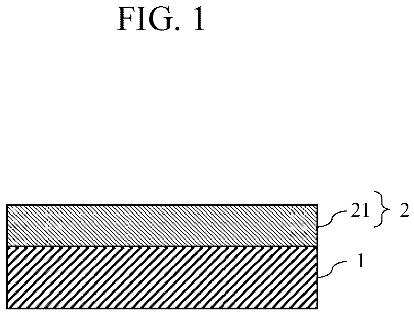

Hereinafter, embodiments of the present invention will be described with reference to the drawings. The present invention includes the first to fourth inventions each providing an antireflection film formed on the surface of a substrate. The first invention provides an antireflection film having a low refractive index layer as the outermost layer on the surface of a substrate. The low refractive index layer has a refractive index lower than that of the substrate and is composed of a specific composition that contains silicon, carbon, fluorine and oxygen as essential components and further contains at least one of indium, tin or bismuth as an essential component. The first invention can typically be embodied in the film structure illustrated in FIG. 1, so the first invention will be described with reference to the embodiment illustrated in FIG. 1.

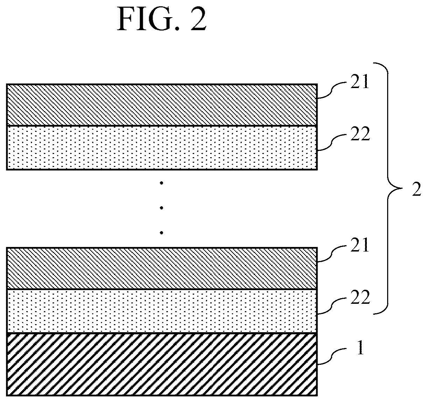

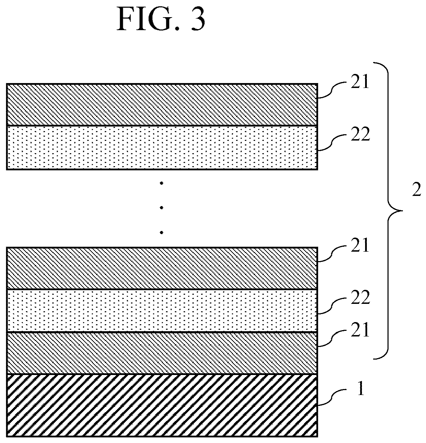

The second invention provides an antireflection film having one or more laminates on the surface of a substrate. Each laminate includes a low refractive index layer as the outermost layer and a high refractive index layer. The low refractive index layer has a refractive index lower than that of the substrate, and the high refractive index layer has a refractive index higher than that of the substrate and is composed of a specific composition. The specific composition contains niobium, carbon, fluorine and oxygen as essential components and further contains at least one of indium, tin or bismuth as an essential component, or contains cerium, carbon, fluorine and oxygen as essential components and further containing at least one of indium, tin or bismuth as an essential component. The second invention can typically be embodied in the film structure illustrated in FIG. 2 or 3, so the second invention will be described with reference to the embodiment illustrated in FIG. 2.

The third invention provides an antireflection film having one or more laminates on the surface of a substrate. Each laminate includes a low refractive index layer as the outermost layer and a high refractive index layer. The low refractive index layer has a refractive index lower than that of the substrate, and the high refractive index layer has a refractive index higher than that of the substrate. The antireflection film further has the low refractive index layer between the substrate and the high refractive index layer closest to the substrate. The low refractive index layer is composed of a specific composition that contains silicon, carbon, fluorine and oxygen as essential components and further contains at least one of indium, tin or bismuth as an essential component. The third invention can typically be embodied in the film structure illustrated in FIG. 3, so the third invention will be described with reference to the embodiment illustrated in FIG. 3.

The fourth invention provides an antireflection film having one or more laminates on the surface of a substrate. Each laminate includes a low refractive index layer as the outermost layer and a high refractive index layer. The low refractive index layer has a refractive index lower than that of the substrate, and the high refractive index layer has a refractive index higher than that of the substrate. The antireflection film further has the low refractive index layer between the substrate and the high refractive index layer closest to the substrate. The high refractive index layer is composed of a specific composition. The specific composition contains niobium, carbon, fluorine and oxygen as essential components and further contains at least one of indium, tin or bismuth as an essential component, or contains cerium, carbon, fluorine and oxygen as essential components and further contains at least one of indium, tin or bismuth as an essential component. The fourth invention can typically be embodied in the film structure illustrated in FIG. 3, so the fourth invention will be described with reference to the embodiment illustrated in FIG. 3.

Substrates of various materials can be used without any particular limitations for those in the above first to fourth inventions, such as inorganic glass substrates and other substrates made of inorganic materials, organic glass substrates and other substrates made of plastic materials, and stainless steel and other substrates made of metal materials. Among these, substrates made of inorganic materials or substrates made of plastic materials are often used as part of optical elements, so when the antireflection film of the present invention is applied to these substrates made of inorganic materials or substrates made of plastic materials, particularly to flexible substrates having flexibility, the effect of the present invention is remarkable.

### «First embodiment»

FIG. 1 is a cross-sectional view illustrating the first embodiment of the antireflection film according to the present invention. Antireflection film 2 of the present embodiment is a thin film formed on the surface of a substrate 1, and is a low refractive index layer 21 exhibiting a refractive index n₁ lower than a refractive index n₀ of the substrate 1. The low refractive index layer 21 of the present embodiment is formed directly on the surface of the substrate 1, and is formed as the outermost layer. The thickness of the low refractive index layer 21 of the present embodiment is not particularly limited. In the present specification, the outermost layer refers to the layer formed on the outermost side as viewed from the substrate 1, and no thin film is formed on a plane outside that outermost layer.

The low refractive index layer 21 exhibiting the refractive index n₁ lower than the refractive index n₀ of the substrate 1 means that, for example, when the refractive index n₀ of the substrate 1 made of inorganic glass is 1.52, the refractive index n₁ of the low refractive index layer 21 of the present embodiment is less than 1.52.

In particular, the low refractive index layer 21 of the present embodiment is a thin film that contains silicon (Si), carbon (C), fluorine (F) and oxygen (O) as essential components and further contains at least one of indium (In), tin (Sn) or bismuth (Bi). The compounding ratio of silicon, carbon, fluorine and oxygen as essential components is not particularly limited. Since it is sufficient that at least one of indium, tin and bismuth is contained as an essential component, two or more of them may be contained. The compounding ratio of indium, tin and bismuth is also not particularly limited. An example of the low refractive index layer 21 of the present embodiment may be a film that contains silicon oxide as a main component, part of which is substituted with an organic fluorine compound, and contains a small amount of indium, tin or bismuth.

The low refractive index layer 21 formed on the surface of the substrate 1 can be formed by a sputtering method using a silicon oxide-polytetrafluoroethylene target that contains indium. This target material contains silicon oxide (SiO₂), polytetrafluoroethylene ((C₂F₄)ₙ) and indium (In), so the sputtered thin film contains silicon (Si), carbon (C), fluorine (F), oxygen (O) and indium (In) as essential components. If tin (Sn) and/or bismuth (Bi) are contained in place of or in addition to the indium contained in the target and this target is used for the sputtering process, the thin film obtained will contain tin and/or bismuth in place of or in addition to indium. By using indium, tin or bismuth as a sintering aid when preparing a sputtering target, the strength of the target can be improved.

### «Second embodiment»

FIG. 2 is a cross-sectional view illustrating the second embodiment of the antireflection film according to the present invention. Antireflection film 2 of the present embodiment is a thin film formed such that one or more laminates are laminated on the surface of a substrate 1. Each laminate includes a low refractive index layer 21 as the outermost layer and a high refractive index layer 22. The low refractive index layer 21 exhibits a refractive index n₁ lower than a refractive index n₀ of the substrate 2, and the high refractive index layer 22 exhibits a refractive index n₂ higher than the refractive index n₀ of the substrate 2. Here, a pair of the low refractive index layer 21 and the high refractive index layer 22 may be laminated to form a single laminate, or two or more pairs may also be laminated to form multiple laminates. The film thicknesses and film thickness ratio of the low refractive index layer 21 and high refractive index layer 22 of the present embodiment are not particularly limited.

The low refractive index layer 21 exhibiting the refractive index n₁ lower than the refractive index n₀ of the substrate 1 means that, for example, when the refractive index n₀ of the substrate 1 made of inorganic glass is 1.52, the refractive index n₁ of the low refractive index layer 21 of the present embodiment is less than 1.52. The high refractive index layer 22 exhibiting the refractive index n₂ higher than the refractive index n₀ of the substrate 1 means that, for example, when the refractive index n₀ of the substrate 1 made of inorganic glass is 1.52, the refractive index n₂ of the high refractive index layer 22 of the present embodiment exceeds 1.52.

In particular, the high refractive index layer 22 of the present embodiment contains niobium (Nb), carbon, fluorine and oxygen as essential components and further contains at least one of indium, tin or bismuth as an essential component, or contains cerium (Ce), carbon, fluorine and oxygen as essential components and further contains at least one of indium, tin or bismuth as an essential component. The compounding ratio of niobium, carbon, fluorine and oxygen as essential components or the compounding ratio of cerium, carbon, fluorine and oxygen as essential components is not particularly limited. Since it is sufficient that at least one of indium, tin and bismuth is contained as an essential component, two or more of them may be contained. The compounding ratio of indium, tin and bismuth is also not particularly limited. An example of the high refractive index layer 22 of the present embodiment may be a film that contains niobium oxide as a main component, part of which is substituted with an organic fluorine compound, and contains a small amount of indium, tin or bismuth. Another example of the high refractive index layer 22 may be a film that contains cerium oxide as a main component, part of which is substituted with an organic fluorine compound, and contains a small amount of indium, tin or bismuth.

The low refractive index layer 21 of the present embodiment may be a thin film that contains silicon, carbon, fluorine and oxygen as essential components and further contains at least one of indium, tin or bismuth, but is not limited to this and may have other compositions.

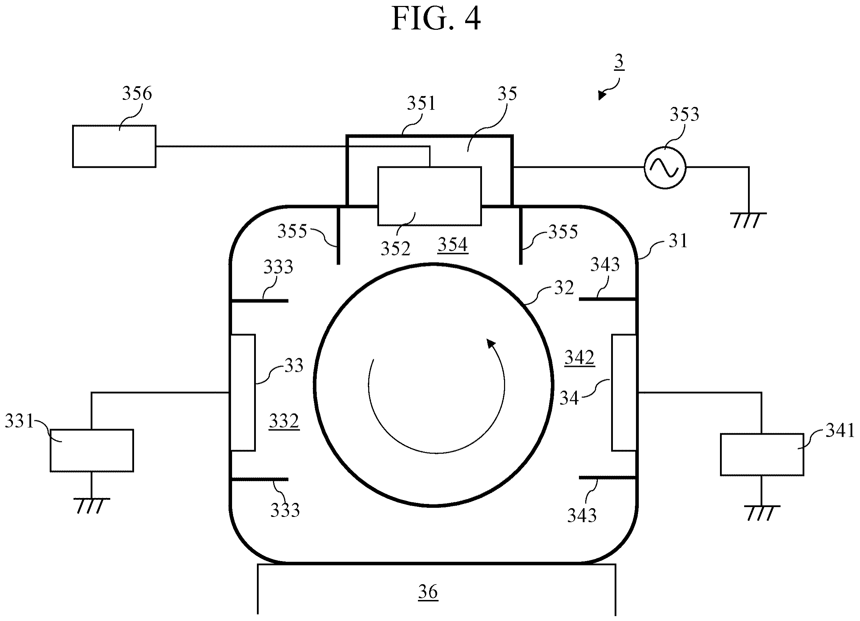

The antireflection film 2 of the present embodiment can be formed by a radical-assisted sputtering method (RAS method) using a sputtering device 3 illustrated in FIG. 4, with a first target being silicon oxide-polytetrafluoroethylene containing indium, a second target being niobium or niobium oxide (or cerium or cerium oxide), and oxygen as a radical source.

Here, the outline of the sputtering device illustrated in FIG. 4 will be described. The antireflection film 2 according to the present invention is preferably formed by a sputtering method using the sputtering device 3 illustrated in FIG. 4. In particular, indium, tin or bismuth can improve the strength of the target materials by using it as a sintering aid for the sputtering target materials in addition to the effect of adjusting the refractive indices of the films. As a result, sputtering can be performed at high power, and the productivity of the film formation process can be improved. Other methods used for film formation include a CVD (Chemical Vapor Deposition) method, an ALD (Atomic Layer Deposition) method, a PLD (Pulsed Laser Deposition) method, a vacuum vapor deposition method, etc.

FIG. 4 is a transverse cross-sectional view illustrating an example of the sputtering device for forming the antireflection film 2 according to the present invention. The sputtering device 3 of this example is a device capable of implementing the radical-assisted sputtering (RAS) method, and includes a vacuum chamber 31 that is a hollow body of an approximately rectangular parallelepiped shape. A pipe for evacuation and a vacuum pump (their illustration is omitted) are connected to the vacuum chamber 31, and the inside of the vacuum chamber 31 can be set/maintained at a predetermined vacuum level. In addition, a cylindrical substrate holder 32 is rotatably provided inside the vacuum chamber 31, and the substrate 1 as a film formation object is held on the outer circumferential surface of the substrate holder.

Two sputtering sources 33 and 34 and one plasma source 35 are installed around the substrate holder 32 provided inside the vacuum chamber 31. Each of the sputtering sources 33 and 34 includes an electrode such as a magnetron sputtering electrode, and upon film formation, a target is attached to the surface of each electrode. AC power sources 331 and 341 are connected to respective electrodes via transformers that adjust the amount of power, and AC voltages, for example, of about 1 kHz to 100 kHz are applied thereto. The plasma source 35 in this example has a case body 351 fixed so as to cover an opening formed in the wall surface of the vacuum chamber 31, and a dielectric module 352 including an antenna fixed to the case body 351. The dielectric module 352 including the antenna is connected to a high-frequency power source 353. The antenna receives power supplied from the high-frequency power source 353 to generate an induced electric field inside the vacuum chamber 31, thus generating plasma.

A film-forming process area 332 is formed in front of the sputtering source 33, and a film-forming process area 342 is formed in front of the sputtering source 34. The film-forming process area 332 on the one hand is surrounded on the up, down, left and right sides by partition walls 333 protruding from the inner wall surface of the vacuum chamber 31 toward the substrate holder 32, and is partitioned so that an independent space can be ensured inside the vacuum chamber 31. On the other hand, the film-forming process area 342 is likewise surrounded on the up, down, left and right sides by partition walls 343 protruding from the inner wall surface of the vacuum chamber 31 toward the substrate holder 32, and is partitioned so that an independent space can be ensured inside the vacuum chamber 31.

Likewise, a reaction process area 354 is formed in front of the plasma source 35. Like the film-forming process areas 332 and 342, the reaction process area 354 is surrounded on the up, down, left and right sides by partition walls 355 protruding from the inner wall surface of the vacuum chamber 31 toward the substrate holder 32, and a space independent of the film-forming process areas 332 and 342 is ensured inside the vacuum chamber 31. In the sputtering device 3 of this example, the processes in the film-forming process areas 332 and 342 and reaction process area 354 are configured to be independently controllable.

A gas supply system for sputtering is connected to each of the sputtering sources 33 and 34, the flow rate of a gas for sputtering to be supplied is adjusted by a mass flow controller, and the gas for sputtering is introduced into each of the film-forming process areas 332 and 342 through a pipe. Likewise, a gas supply system for reaction process 356 is connected to the plasma source 35, the flow rate of a gas for reaction process to be supplied is adjusted by a mass flow controller, and the gas for reaction process is introduced into the reaction process area 354 through a pipe. In FIG. 4, reference numeral 36 denotes a load lock chamber that is provided adjacent to the vacuum chamber 31 for switching the atmospheric pressure to carry in and out the substrate before and after processing.

To laminate the low refractive index layer 21 formed on the surface of the substrate 1 illustrated in FIG. 2 and the high refractive index layer 22 using the sputtering device 3 having such a configuration, first, silicon oxide-polytetrafluoroethylene containing indium as a target for the low refractive index layer 21 is attached to the electrode of one sputtering source 33, and niobium or niobium oxide (or cerium or cerium oxide) as a target for the high refractive index layer 22 is attached to the electrode of the other sputtering source 34. Then, the inside of the vacuum chamber 31 is made into a high vacuum, for example, of about 10⁻¹ to 10⁻⁵ Pa, and while the substrate holder 32 holding the substrate 1 is rotated at a constant speed, an inert gas is supplied as a sputtering gas to the two film-forming process areas 332 and 342, and oxygen gas is supplied as a reaction gas to the reaction process area 354.

When forming the low refractive index layer 21 on the surface of the substrate 1, power is supplied from the AC power source to one sputtering source 33 to which the target for the low refractive index layer 21 (silicon oxide-polytetrafluoroethylene containing indium) is attached. This allows the low refractive index layer 21 to be formed on the surface of the substrate 1 through the sputtering process in one film-forming process area 332. By continuing this film formation process for a predetermined time, the low refractive index layer 21 is formed to a predetermined thickness, so the supply of power from the AC power source to one sputtering source 33 is stopped.

Subsequently, power is supplied from the AC power source to the other sputtering source 34 to which the target for the high refractive index layer 22 (niobium or niobium oxide (or cerium or cerium oxide)) is attached, and power is supplied from the high-frequency power source to the plasma source 35. This allows an intermediate thin film of the high refractive index layer 22 to be formed on the surface of the substrate 1 through consecutive sputtering processes in one film-forming process area 342, and then this intermediate thin film is converted into an ultra-thin film through a plasma exposure process in the reaction process area 354. By repeatedly performing one sputtering process and the plasma exposure process, a next ultra-thin film is deposited on the ultra-thin film, and such a process is repeated until the high refractive index layer 22 is finally formed.

### «Third embodiment»

FIG. 3 is a cross-sectional view illustrating the third embodiment of the antireflection film according to the present invention. Antireflection film 2 of the present embodiment is a thin film formed such that one or more laminates are laminated on the surface of a substrate 1. Each laminate includes a low refractive index layer 21 as the outermost layer and a high refractive index layer 22. The low refractive index layer 21 exhibits a refractive index n₁ lower than a refractive index n₀ of the substrate 2, and the high refractive index layer 22 exhibits a refractive index n₂ higher than the refractive index n₀ of the substrate 2. The antireflection film 2 further has the low refractive index layer 21 between the substrate 1 and the high refractive index layer 22 closest to the substrate 1. Here, a pair of the low refractive index layer 21 and the high refractive index layer 22 may be laminated to form a single laminate, or two or more pairs may also be laminated to form multiple laminates. The film thicknesses and film thickness ratio of the low refractive index layer 21 and high refractive index layer 22 of the present embodiment are not particularly limited.

The low refractive index layer 21 exhibiting the refractive index n₁ lower than the refractive index n₀ of the substrate 1 means that, for example, when the refractive index n₀ of the substrate 1 made of inorganic glass is 1.52, the refractive index n₁ of the low refractive index layer 21 of the present embodiment is less than 1.52. The high refractive index layer 22 exhibiting the refractive index n₂ higher than the refractive index n₀ of the substrate 1 means that, for example, when the refractive index n₀ of the substrate 1 made of inorganic glass is 1.52, the refractive index n₂ of the high refractive index layer 22 of the present embodiment exceeds 1.52.

The compositions of the low refractive index layer 21 and high refractive index layer 22 constituting the antireflection film 2 of the present embodiment may be such that at least the low refractive index layer 21 is a thin film that contains silicon, carbon, fluorine and oxygen as essential components and further contains at least one of indium, tin or bismuth, or such that at least the high refractive index layer 22 is a thin film that contains niobium, carbon, fluorine and oxygen as essential components and further contains at least one of indium, tin or bismuth as an essential component or a thin film that contains cerium, carbon, fluorine and oxygen as essential components and further contains at least one of indium, tin or bismuth as an essential component.

That is, when the one or more low refractive index layers 21 constituting the antireflection film 2 are thin films that contain silicon, carbon, fluorine and oxygen as essential components and further contain at least one of indium, tin or bismuth, the composition of the high refractive index layer 22 is not particularly limited. On the other hand, when the one or more high refractive index layers 22 constituting the antireflection film 2 are thin films that contain niobium, carbon, fluorine and oxygen as essential components and further contain at least one of indium, tin or bismuth as an essential component or thin films that contain cerium, carbon, fluorine and oxygen as essential components and further contain at least one of indium, tin or bismuth as an essential component, the composition of the low refractive index layer 21 is not particularly limited.

An example of the low refractive index layer 21 of the present embodiment may be a film that contains silicon oxide as a main component, part of which is substituted with an organic fluorine compound, and contains a small amount of indium, tin or bismuth. An example of the high refractive index layer 22 of the present embodiment may be a film that contains niobium oxide as a main component, part of which is substituted with an organic fluorine compound, and contains a small amount of indium, tin or bismuth. Another example of the high refractive index layer 22 may be a film that contains cerium oxide as a main component, part of which is substituted with an organic fluorine compound, and contains a small amount of indium, tin or bismuth.

The antireflection film 2 of the present embodiment can be formed by a radical-assisted sputtering method (RAS method) in the same manner as in the above-described second embodiment using the sputtering device 3 illustrated in FIG. 4, with a first target being silicon oxide-polytetrafluoroethylene containing indium, a second target being niobium or niobium oxide (or cerium or cerium oxide), and oxygen as a radical source.

### [Examples]

The present invention will be described hereinafter with reference to examples in which the present invention is further embodied. Note, however, that the specific examples of numerical values and configurations described below do not limit the present invention.

### «Example 1»

An antireflection film 2 with the film structure illustrated in FIG. 1 was formed on one surface of a polycarbonate substrate 1 (Deknoloy C000 available from Escarbo sheet Co., Ltd., thickness 125 µm, refractive index n₀=1.59 at wavelength 550 nm) using a sputtering device (RAS-1100C available from SHINCRON CO., LTD.). The film formation was performed with a target of silicon oxide-polytetrafluoroethylene containing indium (weight ratio of silicon oxide to polytetrafluoroethylene 7:1, indium content 1 wt%) after setting a target power density of 1.7 W/cm², an atmospheric gas of 100% argon gas, and a vacuum chamber film formation pressure of 0.7 Pa. The film thickness of the low refractive index layer 21 constituting the obtained antireflection film 2 was 291 nm, and the refractive index of the low refractive index layer 21 at wavelength 550 nm was n₁=1.453.

The reflectance, heat crack resistance, hardness (nanoindenter), and tensile strength of the obtained antireflection film 2 were measured, and the elemental analysis was further performed. The reflectance was measured using a spectrophotometer (U4100 available from Hitachi High-Tech Corporation), and the measurement of heat crack resistance was performed through heat-treating the film at a predetermined temperature/time in a low-temperature dryer (DX300 available from Yamato Scientific Co., Ltd.) and then observing the surface using a polarization microscope (ECLIPSE LV100 available from NIKON CORPORATION). The hardness was measured using a nanoindenter (TI Premier available form Bruker Corporation). The tensile strength was measured using a tensile tester (ISC-2/100 available from TG Seaton Corporation) through fixing both ends of a test piece having a size of 80 mm×10 mm to the tensile tester and pulling them at a speed of 5 mm/min so that the test would automatically stop when a predetermined tensile length was reached. After the test, the surface was observed using a polarization microscope (ECLIPSE LV100 available from NIKON CORPORATION). The elemental analysis was performed using an energy dispersive X-ray spectroscopy unit (EDX) attached to a scanning electron microscope (JSM-6700F available from JEOL Ltd.). The measurement results of these physical properties are listed in Table 1.

### «Example 2»

An antireflection film 2 with the film structure illustrated in FIG. 2 was formed with two pairs of low refractive index layers 21 and high refractive index layers 22 on one surface of a polyethylene terephthalate substrate 1 (Lumirror T60 available from Toray Industries, Inc., thickness 100 µm, refractive index n₀=1.66 at wavelength 550 nm) using a sputtering device (RAS-1100C available from SHINCRON CO., LTD.). When forming the low refractive index layers 21, the film formation was performed with a target of silicon oxide-polytetrafluoroethylene containing indium (weight ratio of silicon oxide to polytetrafluoroethylene 7:1, indium content 1 wt%) after setting a target power density of 1.7 W/cm², an atmospheric gas of 100% argon gas, and a vacuum chamber film formation pressure of 0.7 Pa. When forming the high refractive index layers 22, the film formation was performed with a target of cerium oxide-polytetrafluoroethylene containing indium (weight ratio of cerium oxide to polytetrafluoroethylene 7:1, indium content 1 wt%) after setting a target power density of 4.4 W/cm², an atmospheric gas of 100% argon gas, and a vacuum chamber film formation pressure of 1.0 Pa. The film thicknesses of the low refractive index layers 21 and high refractive index layers 22 constituting the obtained antireflection film 2 were, in order from the substrate side, 13 nm, 32 nm, 113.9 nm, and 81.3 nm, the refractive index of the low refractive index layers 21 at wavelength 550 nm was n₁=1.453, and the refractive index of the high refractive index layers 22 at wavelength 550 nm was n₂=2.136.

In the same manner as in Example 1, the reflectance, heat crack resistance, hardness (nanoindenter), and tensile strength of the obtained antireflection film 2 were measured, and the elemental analysis was further performed. The measurement results of these physical properties are listed in Table 1.

### «Example 3»

An antireflection film 2 with the film structure illustrated in FIG. 3 was formed with two pairs of low refractive index layers 21 and high refractive index layers 22 on one surface of a polycarbonate substrate 1 (Deknoloy C000 available from Escarbo sheet Co., Ltd., thickness 125 µm, refractive index n₀=1.59 at wavelength 550 nm) using a sputtering device (RAS-1100C available from SHINCRON CO., LTD.). When forming the low refractive index layers 21, the film formation was performed with a target of silicon oxide-polytetrafluoroethylene containing indium (weight ratio of silicon oxide to polytetrafluoroethylene 7:1, indium content 1 wt%) after setting a target power density of 1.7 W/cm², an atmospheric gas of 100% argon gas, and a vacuum chamber film formation pressure of 0.7 Pa. When forming the high refractive index layers 22, the film formation was performed with a target of metallic niobium after setting a target power density of 5.2 W/cm², an atmospheric gas with an oxygen gas/argon gas ratio of 30%, and a vacuum chamber film formation pressure of 0.3 Pa. The film thicknesses of the low refractive index layers 21 and high refractive index layers 22 constituting the obtained antireflection film 2 were, in order from the substrate side, 40.4 nm, 13.9 nm, 42.1 nm, 113.9 nm, and 81.3 nm, the refractive index of the low refractive index layers 21 at 550 nm was n₁=1.453, and the refractive index of the high refractive index layers 22 at 550 nm was n₂=2.356.

In the same manner as in Example 1, the reflectance, heat crack resistance, nanoindenter, and tensile strength of the obtained antireflection film 2 were measured, and the elemental analysis was further performed. The measurement results of these physical properties are listed in Table 1.

### «Comparative Example 1»

An antireflection film 2 with the film structure illustrated in FIG. 3 was formed with two pairs of low refractive index layers 21 and high refractive index layers 22 on one surface of a polycarbonate substrate 1 (Deknoloy C000 available from Escarbo sheet Co., Ltd., thickness 125 µm, refractive index n₀=1.59 at wavelength 550 nm) using a sputtering device (RAS-1100C available from SHINCRON CO., LTD.). When forming the low refractive index layers 21, the film formation was performed with a target of metallic silicon after setting a target power density of 3.4 W/cm², an atmospheric gas with an oxygen gas/argon gas ratio of 11%, and a vacuum chamber film formation pressure of 0.4 Pa. When forming the high refractive index layers 22, the film formation was performed with a target of metallic niobium after setting a target power density of 5.2 W/cm², an atmospheric gas with an oxygen gas/argon gas ratio of 30%, and a vacuum chamber film formation pressure of 0.3 Pa. The film thicknesses of the low refractive index layers 21 and high refractive index layers 22 constituting the obtained antireflection film 2 were, in order from the substrate side, 40.4 nm, 13.9 nm, 42.1 nm, 113.9 nm, and 81.3 nm, the refractive index of the low refractive index layers 21 at wavelength 550 nm was n₁=1.469, and the refractive index of the high refractive index layers 22 at wavelength 550 nm was n₂=2.356.

In the same manner as in Example 1, the reflectance, heat crack resistance, nanoindenter, and tensile strength of the obtained antireflection film 2 were measured, and the elemental analysis was further performed. The measurement results of these physical properties are listed in Table 1.

**[Table 1]**

| | Example 1 | Example 2 | Example 3 | Comparative Example 1 |
|---|---|---|---|---|
| Refractive index | 2.0 | 0.1 | 0.23 | 0.24 |
| Heat crack resistance | ○ | (Substrate deformed) | ○ | × |
| Nanoindenter (GPa) | 4.4 | 11 | 4.9 | 6.1 |
| Tensile crack properties 2% | ○ | ○ | ○ | × |
| Tensile crack properties 5% | ○ | × | ○ | × |
| Detected element (Si) | Detected | Detected | Detected | Detected |
| Detected element (C) | Detected | Detected | Detected | Detected |
| Detected element (O) | Detected | Detected | Detected | Detected |
| Detected element (Nb) | Not detected | Not detected | Detected | Detected |
| Detected element (Ce) | Not detected | Detected | Not detected | Not detected |
| Detected element (F) | Detected | Detected | Detected | Not detected |
| Detected element (In) | Detected | Detected | Detected | Not detected |

### «Consideration»

Regarding the heat crack resistance, the antireflection films of Examples 1 and 3 are excellent in the heat crack resistance as compared with Comparative Example 1. The antireflection film of Example 2 was not able to be evaluated because the heat resistance temperature of the substrate 1 (made of PET) was lower than the testing temperature and the substrate 1 deformed when heated. Regarding the hardness evaluation using a nanoindenter, all of Examples 1 to 3 and Comparative Example 1 have results of 4 GPa or more, which are sufficient hardness. In particular, the hardness of the antireflection film of Example 2 was the highest. This is presumably because the film hardness of CeO₂ is higher than that of SiO₂ and Nb₂O₅ and the performance of the CeO₂ film became apparent when the antireflection film was formed. Regarding the tensile crack resistance, the antireflection films of Examples 1 to 3 did not crack, whereas the antireflection film of Comparative Example 1 cracked after 2% tension.

From the above results, it has been confirmed that the antireflection films of Examples 1 to 3 have antireflection properties and scratch resistance and are also capable of suppressing the occurrence of cracks due to tensile stress.

### [Description of Reference Numerals]

- 1...: Substrate
- 2...: Antireflection film
21... Low refractive index layer
22... High refractive index layer
- 3...: Sputtering device
31... Vacuum chamber
32... Substrate holder
33, 34... Sputtering source
331, 341... AC power source
332, 342... Film-forming process area
333, 343... Partition wall
35... Plasma source
351... Case body
352... Dielectric module
353... High-frequency power source
354... Reaction process area
355... Partition wall
356... Gas supply system for reaction process

## Claims

1. An antireflection film having a low refractive index layer as an outermost layer on a surface of a substrate, the low refractive index layer having a refractive index lower than that of the substrate,
the low refractive index layer containing silicon, carbon, fluorine and oxygen as essential components and further containing at least one of indium, tin or bismuth as an essential component, silicon oxide as a main component, and an organic fluorine compound.

2. The antireflection film according to claim 1, having a high refractive index layer between the substrate and the low refractive index layer as the outermost layer, the high refractive index layer having a refractive index higher than that of the substrate,
the high refractive index layer containing niobium, carbon, fluorine and oxygen as essential components and further containing at least one of indium, tin or bismuth as an essential component, or
the high refractive index layer containing cerium, carbon, fluorine and oxygen as essential components and further containing at least one of indium, tin or bismuth as an essential component.

3. The antireflection film according to claim 2, further having the low refractive index layer between the substrate and the high refractive index layer.

4. An antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the high refractive index layer containing niobium, carbon, fluorine and oxygen as essential components and further containing at least one of indium, tin or bismuth as an essential component, niobium oxide as a main component, and an organic fluorine compound, or
the high refractive index layer containing cerium, carbon, fluorine and oxygen as essential components and further containing at least one of indium, tin or bismuth as an essential component, cerium oxide as a main component, and an organic fluorine compound.

5. The antireflection film according to claim 4, further having the low refractive index layer between the substrate and the high refractive index layer closest to the substrate.

6. The antireflection film according to claim 4, wherein the low refractive index layer contains silicon, carbon, fluorine and oxygen as essential components and further contains at least one of indium, tin or bismuth as an essential component.

7. An antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the antireflection film further having the low refractive index layer between the substrate and the high refractive index layer closest to the substrate,
the low refractive index layer containing silicon, carbon, fluorine and oxygen as essential components and further containing at least one of indium, tin or bismuth as an essential component, silicon oxide as a main component, and an organic fluorine compound.

8. An antireflection film having one or more laminates on a surface of a substrate, each laminate comprising a low refractive index layer as an outermost layer and a high refractive index layer, the low refractive index layer having a refractive index lower than that of the substrate, the high refractive index layer having a refractive index higher than that of the substrate,
the antireflection film further having the low refractive index layer between the substrate and the high refractive index layer closest to the substrate,
the high refractive index layer containing niobium, carbon, fluorine and oxygen as essential components and further containing at least one of indium, tin or bismuth as an essential component, niobium oxide as a main component, and an organic fluorine compound, or
the high refractive index layer containing cerium, carbon, fluorine and oxygen as essential components and further containing at least one of indium, tin or bismuth as an essential component, cerium oxide as a main component, and an organic fluorine compound.

9. The antireflection film according to any one of claims 1 to 8, wherein the substrate is made of a glass material or a plastic material.
